# EUROPEAN PATENT APPLICATION

(11) **EP 4 300 773 A1**
(43) Date of publication of application: **03.01.2024**
(21) Application number: 21928102.9
(22) Date of filing: 20.12.2021
(51) Int. Cl.: H02K 1/18, H02K 21/16

(54) **STATOR AND BRUSHLESS MOTOR**

(30) Priority: 25.02.2021 JP 2021029249
(71) Applicant: Panasonic Intellectual Property Management Co., Ltd., Kadoma-shi, Osaka 571-0057 (JP)
(72) Inventor: AKO, Yuya, Kadoma-shi, Osaka 571-0057 (JP); TAMURA, Hideki, Kadoma-shi, Osaka 571-0057 (JP); MIZUNO, Mitsumasa, Kadoma-shi, Osaka 571-0057 (JP); OKADA, Kenji, Kadoma-shi, Osaka 571-0057 (JP)
(74) Representative: Appelt, Christian W.
(86) International application number: PCT/JP2021/046975
(87) International publication number: WO 2022/181009

(57) **Abstract**

An object of the present disclosure is to improve the circularity of a circuit formed by tip portions of a plurality of teeth portion. A stator (S1) includes: a plurality of stator blocks (1) aligned along a circumferential direction; a plurality of coils provided to the plurality of stator blocks (1) on a one-to-one basis; and a supporter (3) supporting the plurality of stator blocks (1). Each of the plurality of stator blocks (1) includes: a yoke portion (10) located at its outermost perimeter; and a teeth portion (11) protruding from an inner peripheral surface of the yoke portion (10). The yoke portion (10) has a width dimension along the circumferential direction, and the width dimension of the yoke portion (10) is greater than a width dimension of the teeth portion (11) along the circumferential direction. The supporter (3) is closed in the circumferential direction. The supporter (3) holds the plurality of stator blocks (1) such that the plurality of stator blocks (1) are housed in an interior of the supporter (3). The supporter (3) has an inner peripheral surface in contact with at least an outer peripheral surface of the yoke portion (10) of each of the plurality of stator blocks (1).

## Description

### Technical Field

The present disclosure relates to stators and brushless motors and specifically relates to a stator which is of a so-called split core-type and a brushless motor including the stator.

### Background Art

A conventional example is exemplified by a stator and dynamo-electric machinery (brushless motor) described in Patent Literature 1.

The stator described in Patent Literature 1 includes a plurality of stator pieces combined with each other in a circularly cylindrical shape. Each stator piece includes a teeth portion and a yoke portion. The teeth portion and the yoke portion are formed separately from each other and are then connected to each other, thereby forming a stator piece. For example, as shown in FIG. 6 of Patent Literature 1, teeth portions X2 and yoke portions X3 which are formed separately may be connected by recess-and-protrusion mating to form a stator (stator X1). Note that windings are wound around the teeth portions.

The yoke portions of the plurality of stator pieces are bonded to each other by welding or the like to form the stator.

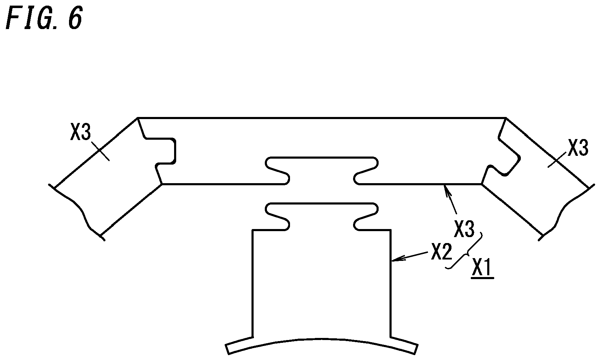

Incidentally, in the stator described in Patent Literature 1, stator pieces facing a rotor are in contact with each other at only both ends of the yoke portions (see FIG. 6). Therefore, a dimension error of each yoke portion may reduce the circularity of a pseudo-circle formed by tip portions of the plurality of teeth portions. Note that reduced circularity of the pseudo-circle formed by the tip portions of the plurality of teeth portions may result in that some of the teeth portions come into contact with the rotor.

### Citation List

### Patent Literature

Patent Literature 1 : JP 2001-128395 A

### Summary of Invention

It is an object of the present disclosure to provide a stator and a brushless motor which have increased circularity of a circle formed by tip portions of a plurality of teeth portions.

A stator according to an aspect of the present disclosure includes: a plurality of stator blocks aligned along a circumferential direction; a plurality of coils provided to the plurality of stator blocks on a one-to-one basis; and a supporter supporting the plurality of stator blocks. Each of the plurality of stator blocks includes: a yoke portion located at an outermost perimeter; and a teeth portion protruding from an inner peripheral surface of the yoke portion. The yoke portion has a width dimension along the circumferential direction, and the width dimension of the yoke portion is greater than a width dimension of the teeth portion along the circumferential direction. The supporter is closed in the circumferential direction and holds the plurality of stator blocks such that the plurality of stator blocks are housed in an interior of the supporter. The supporter has an inner peripheral surface in contact with at least an outer peripheral surface of the yoke portion of each of the plurality of stator blocks.

A brushless motor according to an aspect of the present disclosure includes: the stator; and a rotor rotatably disposed in an interior of the stator.

### Brief Description of Drawings

FIG. 1 is a front view of a stator and a brushless motor according to an embodiment of the present disclosure;
FIG. 2 is a front view of a main part of the stator;
FIG. 3 is a front view of a main part of a first variation of the stator;
FIG. 4 is a front view of a main part of a second variation of the stator;
FIG. 5 is a front view of a main part of a third variation of the stator; and
FIG. 6 is an exploded view of part of a conventional stator.

### Description of Embodiments

A stator and a brushless motor according to an embodiment of the present disclosure will be described in detail below with reference to the drawings. Note that the drawings to be referred to in the following description of the embodiment is a schematic representation. That is to say, the ratio of the dimensions (including thicknesses) of respective constituent elements illustrated on the drawings does not always reflect their actual dimensional ratio. Note that the embodiment to be described below is only an exemplary one of various embodiments of the present disclosure and should not be construed as limiting. The present disclosure is not limited to the embodiment do be described below, and modifications may be made in various manners depending on a design choice or any other factor without departing from the scope of the present disclosure.

### (1) Overview

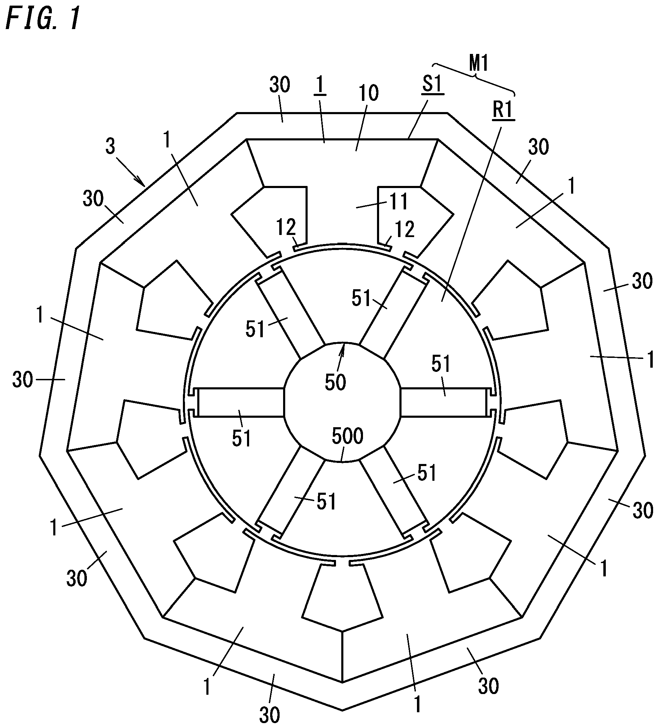

As shown in FIG. 1, a brushless motor M1 according to an embodiment of the present disclosure (hereinafter abbreviated as a brushless motor M1) includes a stator S1 according to the embodiment of the present disclosure (hereinafter abbreviated as a stator S1) and a rotor R1 rotatably disposed in the stator S1.

The rotor R1 includes: a rotor core 50 made of a soft magnetism material and having a circularly cylindrical shape; and a plurality of (in the example shown in the figure, six) permanent magnets 51. The rotor core 50 has a shaft hole 500 having a circularly cylindrical shape and extending through the center thereof. Into the shaft hole 500, a rotation shaft (not shown) is to be inserted.

Each of the six permanent magnets 51 has a rectangular flat plate shape. The permanent magnets 51 are housed in the rotor core 50 such that the permanent magnets 51 are aligned at equal intervals along a circumferential direction of the rotor core 50.

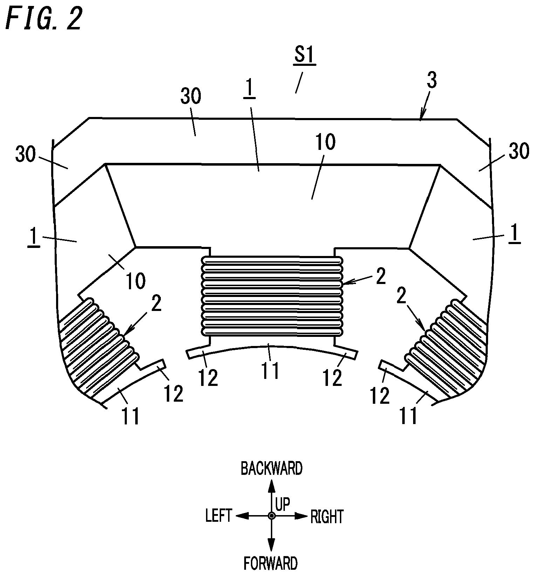

The stator S1 includes: a plurality of (in the example shown in the figure, nine) stator blocks 1 aligned along the circumferential direction; a plurality of coils 2 provided to the plurality of stator blocks 1 on a one-to-one basis; and a supporter 3 holding the plurality of stator blocks 1 (see FIGS. 1 and 2). Note that in FIG. 1, the coils are omitted.

Each of the plurality of stator blocks 1 includes: a yoke portion 10 located at its outermost perimeter; and a teeth portion 11 protruding from an inner peripheral surface of the yoke portion 10. The yoke portion 10 has a width dimension along the circumferential direction, and the width dimension of the yoke portion 10 is greater than a width dimension of the teeth portion 11 along the circumferential direction.

The supporter 3 is closed in the circumferential direction. The supporter 3 holds the plurality of stator blocks 1 such that the plurality of stator blocks 1 are housed in an interior of the supporter 3. The supporter 3 has an inner peripheral surface in contact with at least an outer peripheral surface of the yoke portion 10 of each of the plurality of stator blocks 1.

Therefore, when the plurality of coils 2 included in the stator S1 are excited, magnetic attractive force and magnetic repulsive force act between each stator block 1 and the rotor R1, and the rotor R1 is thus bidirectionally rotatable with respect to the stator S 1. Thus, the rotation shaft inserted in the shaft hole 500 of the rotor R1 is also rotatable together with the rotor R1.

Here, in the conventional example, the plurality of stator pieces are in contact with each other at only both ends of the yoke portions, which may reduce the circularity of the circle formed by tip portions of the plurality of teeth portions.

In contrast, in the stator S1, the width dimension of the yoke portion 10 along the circumferential direction is greater than the width dimension of the teeth portion 11 along the circumferential direction, and the inner peripheral surface of the supporter 3 is in contact with the outer peripheral surface of the yoke portion 10 of each of the plurality of stator blocks 1. That is, the stator S1 has an increased contact area of the plurality of stator blocks 1 with each other (an increased contact area of the yoke portions 10 with each other and an increased contact area of each yoke portion 10 and the supporter 3 with each other) as compared with the stator of the conventional example. As a result, the stator S1 and the brushless motor M1 each have increased circularity of a circle formed by tip portions of the plurality of teeth portions 11.

### (2) Details of Stator

### (2-1) Stator Block

The plurality of stator blocks 1 all have the same configuration. Note that in the following description, unless otherwise indicated, up/down, forward/backward, and left/right directions indicated by arrows in FIG. 2 are defined as forward/backward and left/right directions of each stator block 1, and a direction perpendicular to the surface of the paper of FIG. 2 is defined as an up/down direction, wherein an orientation facing the viewer is upward.

As shown in FIGS. 1 and 2, each stator block 1 includes the yoke portion 10 and the teeth portion 11.

The yoke portion 10 has a quadrangular prism shape. More specifically, the yoke portion 10 has a front surface and a rear surface which are rectangular, and the yoke portion 10 has an upper surface, a lower surface, a left side surface, and a right side surface which are trapezoidal. An upper side and a lower side of the front surface of the yoke portion 10 are respectively shorter than an upper side and a lower side of the rear surface of the yoke portion 10, and a left side and a right side of the front surface of the yoke portion 10 are respectively as long as a left side and a right side of the rear surface of the yoke portion 10.

The teeth portion 11 is in the shape of a rectangular parallelepiped. The height of the teeth portion 11 is equal to the height of the yoke portion 10. That is, an upper surface and a lower surface of the teeth portion 11 are respectively flush with the upper surface and the lower surface of the yoke portion 10. Moreover, the teeth portion 11 protrudes forward from the center in the left/right direction of the front surface of the yoke portion 10. Note that a front surface of the teeth portion 11 is curved like a circular cylinder (see FIGS. 1 and 2).

Moreover, each teeth portion 11 includes a pair of flange portions 12. Each flange portion 12 has a plate shape whose longitudinal direction is in the up/down direction. The flange portions 12 protrude, from front ends of a left side surface and a right side surface of the teeth portion 11, one leftward and one rightward (see FIG. 2). The height of each flange portion 12 is equal to the height of the teeth portion 11. Note that a front surface of each flange portion 12 is curved like a circular cylinder to be flush with the front surface of the teeth portion 11.

Here, the yoke portion 10 and the teeth portion 11 are preferably made of a soft magnetism material such as a silicon steel sheet, ferrite, and an amorphous alloy, integrally as one piece. Alternatively, the yoke portion 10 and the teeth portion 11 may be formed as one piece by stacking thin plate-like members one on top of another.

### (2-2) Coil

Each coil 2 includes, for example, a winding which is made of a conductor, such as copper or a copper alloy, covered with an insulator and which is wound around a corresponding one of the teeth portions 11 (see FIG. 2).

### (2-3) Supporter

The supporter 3 includes a plurality of (in the example shown in the figure, nine) support walls 30 having the same shape and the same dimension. Each of the plurality of support walls 30 has a quadrangular flat plate shape. These plurality of support walls 30 abut on each other at an angle of 140 degrees viewed in the up/down direction, thereby forming the supporter 3 having a polygonal cylindrical shape (see FIG. 1).

The supporter 3 is preferably made of a soft magnetism material such as a silicon steel plate, ferrite, and an amorphous alloy similarly to the stator block 1. Note that the supporter 3 may be made of a non-magnetism material (e.g., aluminum or an aluminum alloy, non-magnetism stainless steel, a synthetic resin). Note that the width of each support wall 30 on an inner circumferential side is substantially equal to the width of the yoke portion 10 on an outer perimeter side (length of each of the upper side and the lower side of the rear surface of the yoke portion 10).

### (3) Assembling Steps of Stator

Next, assembling steps of the stator S1 will be described. Note that the assembling steps described below are mere examples, and the order of some steps may be exchanged. Note that the assembling steps described below are automated by various manufacturing devices, but some steps may be manually performed by a person.

First, a winding machine winds a winding around the teeth portion 11 of each stator block 1, thereby providing the coil 2. Then, the nine stator blocks 1 each provided with the coil 2 are aligned along the circumferential direction. At this time, the yoke portion 10 of each stator block 1 comes into contact with the yoke portions 10 of other stator blocks 1 which the stator block 1 neighbors in the circumferential direction. That is, the left and right side surfaces of the yoke portion 10 respectively come into contact with a right side surface of another neighboring yoke portion 10 on the left of the yoke portion 10 and a left side surface of another neighboring yoke portion 10 on the right of the yoke portion 10 (see FIG. 2).

Subsequently, the yoke portions 10 of each two stator blocks 1 neighbouring, and being in contact with, each other are bonded to each other by an appropriate method such as welding or adhesion.

Next, the supporter 3 covers the plurality of stator blocks 1 such that the nine stator blocks 1 boded to each other are housed in the interior of the supporter 3, thereby housing the plurality of stator blocks 1 in the interior of the supporter 3 (see FIG. 1). Then, the inner peripheral surface of each support wall 30 of the supporter 3 is bonded to the outer periphery of the yoke portion 10 of a corresponding one of the stator blocks 1 by an appropriate method such as welding or adhesion. Thus, assembling of the stator S1 is completed.

### (4) Advantages of Stator According to Embodiment

The stator S1 described above has the following advantages.

One advantage is that relative positions of the plurality of stator blocks 1 each corresponding to a split core are defined by not only the contact of the yoke portions 10 of the stator blocks 1, which neighbor each other in the circumferential direction, with each other but also the contact of each yoke portion 10 and the supporter 3 (a corresponding one of the support walls 30 of the supporter 3) with each other. That is, the stator S1 has an increased area where each yoke portion 10 is in contact with other members (other yoke portions 10 and the supporter 3) as compared with the case where the relative positions of the plurality of stator blocks 1 are defined by only the contact of the yoke portions 10 of the stator blocks 1 neighboring each other in the circumferential direction.

Therefore, the stator S1 has an increased contact area between each yoke portion 10 and other members, thereby suppressing positional displacement from being caused due to dimension differences (dimension differences within tolerance) of the plurality of stator blocks 1. As a result, the stator S1 has increased circularity of the circle formed by the tip portions of the plurality of teeth portions 11.

Another advantage is that the stator S1 includes the supporter 3 made of a magnetic substance, thereby reducing magnetic resistance between the neighboring stator blocks 1 and increasing the output of the brushless motor M1.

Moreover, the stator S1 is configured such that the teeth portions 11 of the respective stator blocks 1 do not come into contact with each other. That is, in any two neighboring stator blocks 1 of the plurality of stator blocks 1, a gap is provided between the flange portions 12 protruding from front ends of the teeth portions 11 in the left/right direction (see FIG. 2).

If the teeth portions 11 (the flange portions 12) of the stator blocks 1 neighboring each other are connected, most part of magnetic flux caused by an excitation current flowing through the coil 2 of each one stator block 1 of the stator blocks 1 may flow through the flange portions 12 to another stator block 1 which the one stator block 1 neighbors, thereby reducing the magnetic flux linked with the rotor R1.

In contrast, in the stator S1, the teeth portions 11 of the stator blocks 1 neighboring each other are not connected, and thus, of the magnetic flux generated by the excitation current flowing through the coil 2, magnetic flux leaking through the gap between the flange portions 12 and linked with the rotor R1 can be increased. As a result, the stator S1 increases the output of the brushless motor M1.

Moreover, in the stator S1, the outer peripheral surface of the supporter 3 has a polyhedron shape (polygonal prism shape), which reduces the size and manufacturing cost (material cost) of the supporter 3 as compared with a supporter 3 having a columnar shape. Moreover, the stator S1 has the advantage that fixing the stator S1 to a case (not shown) for housing the stator S1 is easy as compared with the case where the outer peripheral surface of the supporter 3 has a columnar shape.

### (5) Variations of Stator

Next, first to third variations of the stator S1 according to the embodiment will be described. Note that a stator S1 of each of the first to third variations are distinct in that the supporter 3 holds the plurality of stator blocks 1 and other configurations are in common with the stator S1 of the embodiment.

### (5-1) First Variation

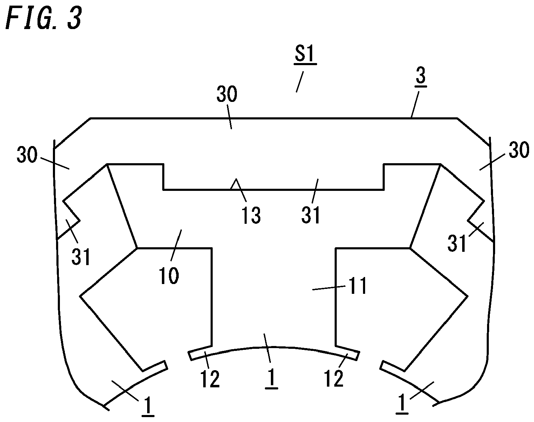

In the stator S1 of the first variation, the supporter 3 includes a plurality of projection portions 31 corresponding to the plurality of stator blocks 1 on a one-to-one basis (see FIG. 3). Each of the plurality of projection portions 31 is in the shape of a rectangular parallelepiped, and the plurality of projection portions 31 protrude inward from the inner peripheral surfaces of the plurality of support walls 30 of the supporter 3. Note that the length of each projection portion 31 in the up/down direction is equal to the length of each support wall 30 in the up/down direction, and the length of each projection portion 31 in the left/right direction is less than the length of an inner surface of each support wall 30 in the left/right direction.

On the other hand, outer surfaces of the yoke portions 10 of the plurality of stator blocks 1 have recesses 13 to be fitted to the projection portions 31 on a one-to-one basis. Note that dimensions of each recess 13 in the up/down, left/right, and forward/backward direction are substantially equal to dimensions of each projection portion 31 protruding from the support wall 30 in the up/down, left/right, and forward/backward directions respectively.

Each of the plurality of stator blocks 1 is connected to a corresponding one of the support walls 30 (the supporter 3) by press fitting the projection portion 31 into the recess 13 formed in the outer peripheral surface of the yoke portion 10.

### (5-2) Second Variation

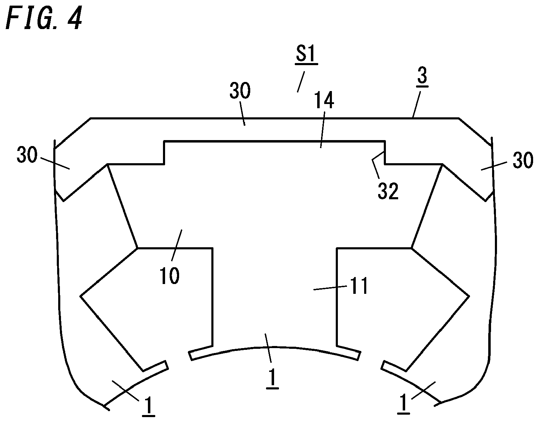

In the stator S1 of the second variation, the supporter 3 has a plurality of recessed portions 32 corresponding to the plurality of stator blocks 1 on a one-to-one basis (see FIG. 4). Each of the plurality of recessed portions 32 has a rectangular-groove shape and is formed in the inner peripheral surface of a corresponding one of the plurality of support walls 30 of the supporter 3. Note that the length of each recessed portion 32 in the up/down direction is equal to the length of each support wall 30 in the up/down direction, and the length of each recessed portion 32 in the left/right direction is less than the length of the inner surface of each support wall 30 in the left/right direction.

On the other hand, the outer surfaces of the yoke portions 10 of the plurality of stator blocks 1 are provided with projections 14 to be fitted to the recessed portions 32 on a one-to-one basis. The plurality of projections 14 are in the shape of a rectangular parallelepiped and protrude outward from the outer peripheral surfaces of the yoke portions 10 of the respective stator blocks 1. Note that the length of each projection 14 in the up/down direction is equal to the length of each yoke portion 10 in the up/down direction, and the length of each projection 14 in the left/right direction is less than the length of the inner surface of each yoke portion 10 in the left/right direction. Note that dimensions of each recessed portion 32 in the up/down, left/right, and forward/backward directions are substantially equal to dimensions of each projection 14 in the up/down, left/right, and forward/backward directions respectively.

Each of the plurality of stator blocks 1 is connected to a corresponding one of the support walls 30 (the supporter 3) by press fitting the projection 14 on the outer peripheral surface of the yoke portion 10 into the recessed portion 32.

In the stator S1 of each of the first variation and the second variation, the yoke portion 10 of each stator block 1 and a corresponding one of the support walls 30 of the supporter 3 are connected to each other by recess-and-protrusion mating, thereby further increasing the contact area of the yoke portion 10 and the support wall 30 with each other. Note that the supporter 3 and the plurality of stator blocks 1 are connected to each other preferably by press fitting the projections 14 into the respective recessed portions 32 or by press fitting the projection portions 31 into the respective recesses 13. The press fitting enables the supporter 3 and the plurality of stator blocks 1 to be firmly connected to each other.

### (5-3) Third Variation

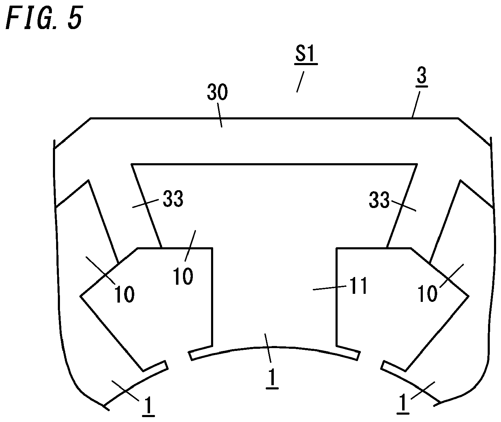

In the stator S1 of the third variation, the supporter 3 includes a plurality of (nine) wall portions 33 protruding inward from the inner peripheral surface of the supporter 3. Each of the plurality of wall portions 33 is disposed between the yoke portions 10 of the respective stator blocks 1 and is in contact with the yoke portions 10 (see FIG. 5).

Each wall portion 33 is in the shape of a rectangular parallelepiped, and the wall portions 33 protrude inward from a plurality of corners on the inner peripheral surface of the supporter 3. Note that each wall portion 33 has a tip end surface recessed in a V-shape.

Here, each of the plurality of stator blocks 1 is connected to a corresponding one of the support walls 30 (the supporter 3) by press fitting the yoke portion 10 between two wall portions 33 neighboring each other in the circumferential direction. Note that both the left and right side surfaces and the rear surface (outer peripheral surface) of the yoke portion 10 of each of the plurality of stator blocks 1 may be bonded to the wall portions 33 and a corresponding one of the support walls 30 respectively by an appropriate method such as welding or adhesion.

As described above, the supporter 3 of the stator S1 of the third variation includes the plurality of wall portions 33 disposed between the yoke portions 10 of the plurality of stator blocks 1 and in contact with the yoke portions 10, and therefore, the stator S1 has a further increased contact area of the yoke portions 10 and the supporter 3 with each other.

### (6) Summary

A stator (S1) of a first aspect of the present disclosure includes: a plurality of stator blocks (1) aligned along a circumferential direction; a plurality of coils (2) provided to the plurality of stator blocks (1) on a one-to-one basis; and a supporter (3) supporting the plurality of stator blocks (1). Each of the plurality of stator blocks (1) includes: a yoke portion (10) located at its outermost perimeter; and a teeth portion (11) protruding from an inner peripheral surface of the yoke portion (10). The yoke portion (10) has a width dimension along the circumferential direction, and the width dimension of the yoke portion (10) is greater than a width dimension of the teeth portion (11) along the circumferential direction. The supporter (3) is closed in the circumferential direction. The supporter (3) holds the plurality of stator blocks (1) such that the plurality of stator blocks (1) are housed in an interior of the supporter (3). The supporter (3) has an inner peripheral surface in contact with at least an outer peripheral surface of the yoke portion (10) of each of the plurality of stator blocks (1).

The stator (S1) of the first aspect has an increased contact area of the yoke portions (10) with each other and an increased contact area of each yoke portion (10) and the supporter (3) with each other and thus has increased circularity of a circle formed by tip portions of the plurality of teeth portion (11).

A stator (S1) of a second aspect of the present disclosure can be implemented in combination with the first aspect. In the stator (S1) of the second aspect, each of the plurality of stator blocks (1) preferably includes a projection (14) or a recess (13), and the supporter (3) preferably includes a plurality of recessed portions (32) or projection portions (31) in or on the inner peripheral surface. The plurality of recessed portions (32) or projection portions (31) correspond to the plurality of stator blocks (1) on a one-to-one basis. The projection (14) of each of the plurality of stator blocks (1) is configured to be fitted to a corresponding one recessed portion (32) of the plurality of recessed portions (32) or projection portions (31). The recess (13) of each of the plurality of stator blocks (1) is configured to be fitted to a corresponding one projection portion (31) of the plurality of recessed portions (32) or projection portions (31).

In the stator (S1) of the second aspect, the yoke portion (10) of each of the plurality of stator blocks (1) and the supporter (3) are connected by recess-and-protrusion mating. Therefore, stator (S1) of the second aspect has a further increased contact area of each of the plurality of yoke portions (10) and the supporter (3) with each other.

A stator (S1) of a third aspect of the present disclosure can be implemented in combination with the second aspect. In the stator (S1) of the third aspect, the supporter (3) preferably includes, as the plurality of recessed portions (32) or projection portions (31), a plurality of recessed portions (32), each of the plurality of stator blocks (1) includes the projection (14) such that the plurality of stator blocks (1) includes respective projections (14), and the supporter (3) and the plurality of stator blocks (1) are connected to each other by each of the respective projections (14) press fitted into a corresponding one of the plurality of recessed portions (32). Alternatively, in the stator (S1) of the third aspect, the supporter (3) preferably includes, as the plurality of recessed portions (32) or projection portions (31), a plurality of projection portions (31), each of the plurality of stator blocks (1) includes the recesses (13) such that the plurality of stator blocks (1) includes respective recesses (13), and the supporter (3) and the plurality of stator blocks (1) are connected to each other by each of the plurality of projection portions (31) press fitted into a corresponding one of the respective recesses (13).

In the stator (S1) of the third aspect, the supporter (3) is firmly connected to the plurality of stator blocks (1).

A stator (S1) of a fourth aspect of the present disclosure can be implemented in combination with any one of the first to third aspects. In the stator (S1) of the fourth aspect, the supporter (3) preferably include a plurality of wall portions (33) protruding inward from the inner peripheral surface of the supporter. Each of the plurality of wall portions (33) is disposed between, and is in contact with, the yoke portion (10) of one of the plurality of stator blocks (1) and the yoke portion (10) of another one of the stator blocks (1).

The stator (S1) of the fourth aspect has a further increased contact area of the supporter (3) and the plurality of yoke portions (10) each other.

A stator (S1) of a fifth aspect of the present disclosure can be implemented in combination with any one of the first to fourth aspects. In the stator (S1) of the fifth aspect, the teeth portion (11) of each one of the plurality of stator blocks (1) is out of contact with the teeth portion (11) of another one of the plurality of stator blocks (1).

In the stator (S1) of the fifth aspect, of magnetic flux generated by an excitation current flowing through the coils (2), magnetic flux leaking out of a gap between the teeth portions (11) is increased, thereby increasing an output of a brushless motor (M1).

A stator (S1) of a sixth aspect of the present disclosure can be implemented in combination any one of the first to fifth aspects. In the stator (S1) of the sixth aspect, the supporter (3) has an outer peripheral surface which preferably has a polyhedron shape.

In the stator (S1) of the sixth aspect, the size and the manufacturing cost (material cost) of the supporter (3) is reduced as compared with a supporter (3) having a columnar shape.

A brushless motor (M1) of a seventh aspect of the present disclosure includes the stator (S1) of any one of the first to sixth aspects and a rotor (R1) rotatably disposed in an interior of the stator (S1).

The brushless motor (M1) of the seventh aspect has an increased contact area of the yoke portions (10) with each other and an increased contact area of each yoke portion (10) and the supporter (3) with each other and thus has increased circularity of a circle formed by tip portions of the plurality of teeth portion (11).

### Reference Signs List

- M1: Brushless Motor
- S1: Stator
- R1: Rotor
- 1: Stator Block
- 2: Coil
- 3: Supporter
- 10: Yoke Portion
- 11: Teeth Portion
- 13: Recess
- 14: Projection
- 30: Support Wall
- 31: Projection Portion
- 32: Recessed Portion
- 33: Wall Portion

## Claims

1. A stator comprising:
a plurality of stator blocks aligned along a circumferential direction;
a plurality of coils provided to the plurality of stator blocks on a one-to-one basis; and
a supporter supporting the plurality of stator blocks,
each of the plurality of stator blocks including
a yoke portion located at an outermost perimeter and
a teeth portion protruding from an inner peripheral surface of the yoke portion,
the yoke portion having a width dimension along the circumferential direction, the width dimension of the yoke portion being greater than a width dimension of the teeth portion along the circumferential direction,
the supporter being closed in the circumferential direction and holding the plurality of stator blocks such that the plurality of stator blocks are housed in an interior of the supporter,
the supporter having an inner peripheral surface in contact with at least an outer peripheral surface of the yoke portion of each of the plurality of stator blocks.

2. The stator of claim 1, wherein
each of the plurality of stator blocks includes
a projection or
a recess,
the supporter includes a plurality of recessed portions or projection portions in or on the inner peripheral surface, and
the plurality of recessed portions or projection portions corresponding to the plurality of stator blocks on a one-to-one basis,
the projection of each of the plurality of stator blocks being configured to be fitted to a corresponding one recessed portion of the plurality of recessed portions or projection portions,
the recess of each of the plurality of stator blocks being configured to be fitted to a corresponding one projection portion of the plurality of recessed portions or projection portions.

3. The stator of claim 2, wherein
the supporter includes, as the plurality of recessed portions or projection portions, a plurality of recessed portions, each of the plurality of stator blocks includes the projection such that the plurality of stator blocks includes respective projections, and the supporter and the plurality of stator blocks are connected to each other by each of the respective projections press fitted into a corresponding one of the plurality of recessed portions, or
the supporter includes, as the plurality of recessed portions or projection portions, a plurality of projection portions, each of the plurality of stator blocks includes the recesses such that the plurality of stator blocks includes respective recesses, and the supporter and the plurality of stator blocks are connected to each other by each of the plurality of projection portions press fitted into a corresponding one of the respective recesses.

4. The stator of any one of claims 1 to 3, wherein
the supporter includes a plurality of wall portions protruding inward from the inner peripheral surface of the supporter, and
each of the plurality of wall portions is disposed between, and is in contact with, the yoke portion of one of the plurality of stator blocks and the yoke portion of another one of the stator blocks.

5. The stator of any one of claims 1 to 4, wherein
the teeth portion of each one of the plurality of stator blocks is out of contact with the teeth portion of another one of the plurality of stator blocks.

6. The stator of any one of claims 1 to 5, wherein
the supporter has an outer peripheral surface which preferably has a polyhedron shape.

7. A brushless motor comprising:
the stator of any one of claims 1 to 6; and
a rotor rotatably disposed in an interior of the stator.
